(19) Europäisches Patentamt
European Patent Office
Office européen des brevets

(11) EP 3 922 652 B1

(12) EUROPEAN PATENT SPECIFICATION

(45) Date of publication and mention of the grant of the patent:
**17.04.2024 Bulletin 2024/16**

(21) Application number: **20752024.8**

(22) Date of filing: **05.02.2020**

(51) International Patent Classification (IPC):
***C08F 261/04*** (2006.01) ***C08L 51/00*** (2006.01)
***H01M 4/131*** (2010.01) ***H01M 4/139*** (2010.01)
***H01M 4/1391*** (2010.01) ***H01M 4/505*** (2010.01)
***H01M 4/525*** (2010.01) ***H01M 4/62*** (2006.01)
***C09D 129/04*** (2006.01) ***H01M 4/04*** (2006.01)
*C08F 216/06* (2006.01) *C08K 3/04* (2006.01)

(52) Cooperative Patent Classification (CPC):
(C-Sets available)
**C09D 129/04; C08F 261/04; C08L 51/003; H01M 4/0402; H01M 4/131; H01M 4/1391; H01M 4/622;** C08F 216/06; C08K 3/04; Y02E 60/10

(Cont.)

(86) International application number:
**PCT/JP2020/004408**

(87) International publication number:
**WO 2020/162505 (13.08.2020 Gazette 2020/33)**

# (54) COMPOSITION, SLURRY FOR POSITIVE ELECTRODE, AND BATTERY

ZUSAMMENSETZUNG, AUFSCHLÄMMUNG FÜR POSITIVE ELEKTRODE UND BATTERIE

COMPOSITION, SUSPENSION EPAISSE POUR ELECTRODE ET BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2019 JP 2019019786**

(43) Date of publication of application:
**15.12.2021 Bulletin 2021/50**

(73) Proprietor: **Denka Company Limited**
**Tokyo 103-8338 (JP)**

(72) Inventors:
- **NAKANISHI, Soichiro**
  **Tokyo 103-8338 (JP)**
- **NARUTOMI, Takuya**
  **Tokyo 103-8338 (JP)**
- **SUZUKI, Shigeru**
  **Tokyo 103-8338 (JP)**
- **WATANABE, Jun**
  **Tokyo 103-8338 (JP)**

(74) Representative: **Gulde & Partner**
**Patent- und Rechtsanwaltskanzlei mbB**
**Wallstraße 58/59**
**10179 Berlin (DE)**

(56) References cited:
**WO-A1-2018/230599**
**JP-A- 2000 095 823**
**JP-A- 2010 521 798**
**US-A1- 2016 380 314**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 261/04, C08F 220/06, C08F 220/285;**
**C08F 261/04, C08F 220/44, C08F 216/085;**
**C08F 261/04, C08F 220/44, C08F 220/285;**
**C08F 261/04, C08F 220/44, C08F 220/286;**
**C09D 129/04, C08K 3/22, C08L 51/003;**
C08F 216/06, C08F 218/08

## Description

### Technical Field

The present invention relates to a composition, a slurry for a positive electrode, and a battery.

### Background Art

In recent years, a secondary battery has been used as a power source for electronic devices such as notebook computers, mobile phones. Moreover, the development of hybrid vehicles and electric vehicles using secondary batteries is promoted to reduce the environmental load. Secondary batteries having high energy density, high voltage, and high durability are required for their power sources. Lithium ion secondary batteries are attracting attention as secondary batteries that can achieve high voltage and high energy density.

A lithium ion secondary battery is composed of a positive electrode, a negative electrode, an electrolyte, and a separator. The positive electrode is composed of a positive electrode active material, a conductive auxiliary agent, a metal foil, and a binder (Patent Literatures 1 to 3).

A negative electrode for lithium metal battery, wherein the negative electrode includes a protection film which includes at least one first polymer selected from a polyvinyl alcohol graft copolymer, a crosslinked polyvinyl alcohol graft copolymer, a crosslinked polyvinyl alcohol copolymer, and a blend thereof is described in Patent Litearture 5.

A composition that contains a graft copolymer obtained by graft copolymerizing of a monomer containing (meth) acrylonitrile and (meth) acrylic acid ester as main components and a stem polymer based on polyvinyl alcohol is disclosed in Patent Literature 6.

A method for producing a water absorptive gel solution wherein the method is characterized by subjecting a modified poly(vinyl alcohol) to heat treatment in the presence of a peroxide-based polymerization initiator and then graft-copolymerizing a specific crosslinkable monomer in a specific monomer ratio is disclosed in Patent Literature 7.

A graft-modified aqueous polymer latex which is used as adhesive for lithium-ion batteries is composed of polyvinyl alcohol as a base polymer and a monomer selected of epoxy propane, acrylonitrile, or butyl acrylate as the first graft copolymerization monomer, acrylamide as the second graft copolymerization monomer and vinyl acetate as the third graft copolymerization monomer is described in Patent Literature 8.

As a binder for positive electrode for a lithium ion secondary battery, a binder (a graft copolymer), having high binding properties and oxidation resistance and mainly composed of polyvinyl alcohol and polyacrylonitrile is disclosed (Patent Literature 4).

### Citation List

### Patent Literature

Patent Literature 1 :JP2013-98123
Patent Literature 2 :JP2013-84351
Patent Literature 3 :JPH6-172452
Patent Literature 4 :WO2015/053224
Patent Literature 5: US 2016/380314 A1
Patent Literature 6: WO 2018/230599 A1
Patent Literature 7: JP 2000 095823 A
Patent Literature 8: JP 2010 521798 A

### Summary of Invention

### Technical Problem

However, when a binder (a graft copolymer) mainly containing polyvinyl alcohol and polyacrylonitrile is used, it has been required that the viscosity of the slurry is low and stable in the production of the electrode. Further, it has been required to solve such a problem of viscosity and to improve the characteristics as a secondary battery.

The present invention was made in consideration of such problems and provides a composition for a positive electrode capable of producing a slurry excellent in stability. The present invention also provides a composition for a positive electrode capable of producing a low viscosity slurry. Further, the present invention provides a composition for

a positive electrode capable of producing a positive electrode excellent in rate characteristics.

**Solution to Problem**

According to the invention, a composition comprising a graft copolymer, wherein

the graft copolymer has a stem polymer and a plurality of branch polymers,
the stem polymer has a polyvinyl alcohol structure,
each of a first monomer unit and a second monomer unit is included in at least one of the plurality of branch polymers,
the first monomer unit is a (meth) acrylonitrile monomer unit and/or a (meth)acrylic acid monomer unit,
the second monomer unit has an ether structure,
wherein the ether structure has a polyethylene oxide structure, and
when a content of the polyethylene oxide structure in the composition is $C_{PEO}$% by mass, and a total content of the first monomer unit and the second monomer unit in the composition is $C_M$% by mass, a ratio of the content of the polyethylene oxide structure to the total content of the first monomer unit and the second monomer unit ($C_{PEO}/(C_M+C_{PEO})$) is 0.20 to 0.40 is provided.

The inventors have made intensive studies and found that when a composition containing a graft copolymer having a structure in which a first monomer unit, which is a (meth) acrylonitrile monomer unit and/or (meth) acrylic acid monomer unit, and a second monomer unit having an ether structure are graft-copolymerized to a stem polymer having a polyvinyl alcohol structure is used as a composition for a positive electrode, the stability of the slurry is improved, completing the present invention.

The following are examples of various embodiments of the present invention. The embodiments shown below can be combined with each other.

Preferably, the composition further comprises a free polymer,

the free polymer does not have a covalent bond with the graft copolymer, and
the free polymer contains at least one of a polymer having the polyvinyl alcohol structure and a polymer having the first monomer unit and/or the second monomer unit.

Preferably, when a content of the polyvinyl alcohol structure in the composition is $C_{PVA}$% by mass and a total content of the first monomer unit and the second monomer unit in the composition is $C_M$% by mass, a ratio of the content of the polyvinyl alcohol structure to the total content of the first monomer unit and the second monomer unit ($C_{PVA}/(C_M+C_{PVA})$) is 0.05 to 0.7.

Preferably, when a content of the first monomer unit is $PM_1$ mol%, and a content of the second monomer unit is $PM_2$ mol%, a ratio of the first monomer unit and the second monomer unit contained in the composition ($PM_1/(PM_2+PM_1)$) is 0.1 to 0.9.

Preferably, at least one of the plurality of branch polymers has a copolymerization structure of the first monomer unit and the second monomer unit.

Preferably, the ether structure has at least one selected from the group consisting of a linear polyether structure, a branched polyether structure, and an annular ether structure.

Preferably, an average polymerization degree of the polyvinyl alcohol structure in the composition is 300 to 4000.

Preferably, a saponification degree of the polyvinyl alcohol structure in the composition is 60 to 100 mol%.

Preferably, a graft ratio of the graft copolymer is 40 to 3000%.

According to another aspect of the present invention, a slurry for a positive electrode containing the composition, a positive electrode active material, and a conductive auxiliary agent is provided.

Preferably, a solid content of the composition is 0.1 to 20% by mass with respect to a total solid content in the slurry for the positive electrode.

Preferably, the positive electrode active material contains at least one selected from the group consisting of: $LiNi_XMn_{(2-X)}O_4$ ($0<X<2$); $Li(CoxNi_YMn_Z)O_2$ ($0<X<1, 0<Y<1, 0<Z<1$, and $X+Y+Z=1$); and $Li(Ni_XCo_YAl_Z)O_2$ ($0<X<1, 0<Y<1, 0<Z<1$, and $X+Y+Z=1$).

Preferably, the conductive auxiliary agent is at least one selected from the group consisting of (i) fibrous carbon, (ii) carbon black, and (iii) a carbon composite in which fibrous carbon and carbon black are interconnected.

Preferably, a positive electrode comprising a metal foil and a coating film of the slurry for the positive electrode formed on the metal foil.

A battery comprising the positive electrode.

According to another aspect of the present invention, a positive electrode comprising a metal foil and a coating film of the slurry for the positive electrode formed on the metal foil is provided.

According to another aspect of the present invention, a battery comprising the positive electrode.

**Advantageous Effects of Invention**

The present invention provides a slurry having excellent stability and a composition for a positive electrode capable of producing a battery having excellent rate characteristics.

**Description of Embodiments**

The following is an explanation of the embodiments of the present invention. The various features shown in the following embodiments can be combined with each other. In addition, the invention is independently established for each property.

1. Composition for positive electrode

A composition according to one embodiment of the present invention is a composition containing a graft copolymer, wherein the graft copolymer is a composition having a stem polymer and a plurality of branch polymers. A polymer is hereinafter also referred to as a copolymer.

1-1. Graft copolymer

The graft copolymer of one embodiment of the invention is synthesized by graft-copolymerizing a first monomer and a second monomer to the stem polymer. The branch polymer produced by the graft-polymerization is grafted to the stem polymer, that is, covalently bonded to the stem polymer. In this process, the ungrafted stem polymer and the polymer containing the first monomer and/or the second monomer which is not grafted to the stem polymer, that is, which is not covalently bound to the graft copolymer, may be simultaneously generated as a free polymer. Thus, the composition of one embodiment of the present invention preferably consists substantially of the graft copolymer and the free polymer. In addition, monomers other than the first monomer and the second monomer may be polymerized as long as the effect of the present invention is not impaired.

The graft ratio of the graft copolymer is preferably 40 to 3000%, and more preferably 300 to 1500%. From the viewpoint of solubility, the graft ratio is preferably within the above range. When the graft ratio is 40% or higher, the solubility in NMP is improved. When the graft ratio is 3000% or lower, the viscosity of the NMP solution is reduced and the fluidity of the NMP solution is improved.

1-2. Stem polymer

The stem polymer has a polyvinyl alcohol structure. Here, the polyvinyl alcohol structure is derived from polyvinyl alcohol, for example, which is synthesized by polymerizing a vinyl acetate monomer to obtain polyvinyl acetate and saponifying the polyvinyl acetate. Preferably, the stem polymer is composed mainly of the polyvinyl alcohol structure. More preferably, the stem polymer is polyvinyl alcohol.

The average polymerization degree of the polyvinyl alcohol structure in the composition is preferably 300 to 4000, and more preferably 500 to 2000. When the average polymerization degree is in the above range, the stability of the slurry is particularly high. It is also preferable to be in the above range in terms of solubility, binding properties, and viscosity of the binder. When the average polymerization degree is 300 or higher, the bonding between the binder, and the active material and conductive auxiliary agent is improved, and durability is enhanced. When the average polymerization degree is 4000 or less, solubility is improved and viscosity is reduced, making it easier to manufacture the slurry for the positive electrode. The average polymerization degree here is the value measured by the method according to JIS K 6726.

The saponification degree of the polyvinyl alcohol structure in the composition is preferably 60 to 100 mol%, and more preferably 90 to 100 mol%. When the saponification degree is in the above range, the stability of the slurry is particularly high. The saponification degree here is the value measured by the method according to JIS K 6726.

1-3. Branch polymer

Each of the first monomer unit and the second monomer unit is contained in at least one of the plurality of branch polymers. That is, only one of the first monomer unit and the second monomer unit may be included in one of the plurality of branch polymers, and both of the first monomer unit and the second monomer unit may be included in one of the plurality of branch polymers. Further, a monomer unit other than the first monomer unit and the second

monomer unit may be contained as long as the effect of the present invention is not impaired. Here, the first monomer unit and the second monomer unit are monomer units derived from the first monomer and the second monomer used in the synthesis of the graft copolymer, respectively. Preferably, at least one of the plurality of branch polymers has a copolymerization structure of the first monomer unit and the second monomer unit. The branched polymer is preferably a copolymer substantially consisting of the first monomer unit and the second monomer unit, and more preferably a copolymer consisting of the first monomer unit and the second monomer unit.

1-4. Free polymer

The composition for the positive electrode according to one embodiment of the present invention may further contain a free polymer. The free polymer is at least one selected from a polymer having a polyvinyl alcohol structure and a polymer having the first monomer unit and/or the second monomer unit. The polymer having a polyvinyl alcohol structure mainly means the stem polymer which was not involved in the graft-copolymerization. The polymer having the first monomer unit and/or the second monomer unit means a homopolymer of the first monomer, a homopolymer of the second monomer, a copolymer containing the first monomer and the second monomer, and the like, which is not copolymerized to the graft copolymer (i.e., the stem polymer). In addition, as long as the effect of the present invention is not impaired, a homopolymer of a monomer other than the first monomer and the second monomer and a copolymer of the monomer other than the first monomer and the second monomer, the first monomer, and the second monomer may be included. The free polymer is preferably a copolymer consisting substantially of the first monomer and the second monomer, and even more preferably a copolymer consisting of the first monomer and the second monomer.

In addition, a weight average molecular weight of the free polymer other than the stem polymer, such as a homopolymer of the first monomer, a homopolymer of the second monomer, and a copolymer containing the first monomer and the second monomer is preferably 30,000 to 300,000, more preferably 40000 to 200,000, and more preferably 50000 to 150000. From the viewpoint of suppressing the increase in viscosity and easily producing the slurry for positive electrodes, the weight average molecular weight of the free polymer other than the stem polymer is preferably 300,000 or less, more preferably 200,000 or less, and still more preferably 1500,00 or less. The weight average molecular weight of the free polymer other than the stem polymer can be determined by GPC (gel permeation chromatography).

1-5. First monomer unit

The first monomer unit is a (meth) acrylonitrile monomer unit and/or a (meth) acrylic acid monomer unit. The first monomer unit is preferably a (meth) acrylonitrile monomer unit and is more preferably an acrylonitrile monomer unit.

That is, the first monomer used to synthesize the graft copolymer is preferably (meth) acrylonitrile and/or (meth) acrylic acid, more preferably (meth) acrylonitrile, and still more preferably acrylonitrile. Thus, the first monomer unit has a structure derived from these.

1-6. Second monomer unit

The second monomer unit has an ether structure. The ether structure preferably has at least one selected from the group consisting of a linear polyether structure, a branched polyether structure, and a cyclic ether structure. More preferably, the ether structure has a polyethylene oxide structure.

That is, a second monomer used in synthesizing the graft polymer is a monomer having an ether structure, preferably

a monomer having a (meth) acrylic acid ester structure having an ether structure, the (meth) acrylic acid ester structure represented by the following general formula A is preferable.

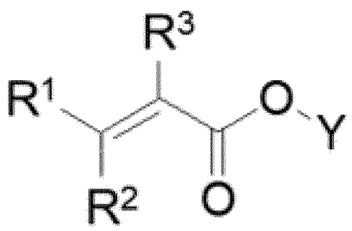

(A)

In the general formula (A), Y is preferably -(AO) n-R. AO is an oxyalkylene group. The number of carbon atoms of the oxyalkylene group is preferably 1 to 18, and more preferably 2 to 10. As the oxyalkylene group, one or more of

an ethylene oxide group is most preferable. n is 0 or more. n is preferably 1 or more. n is preferably 30 or less, and more preferably 10 or less.

Further, each of $R^1$, $R^2$, $R^3$, and R is hydrogen (H), an optionally substituted hydrocarbon group, an ether group, or the like. Preferably, an optionally substituted hydrocarbon group and an ether group is a hydrocarbon group or an ether group having 1 to 20 carbon atoms.

As $R^1$, $R^2$, $R^3$, and R, an unsubstituted group is preferable. As R, a hydrocarbon group is preferable. As the hydrocarbon group, one or more of a methyl group and an ethyl group are preferable.

As the (meth) acrylic acid ester derivative, alkoxypolyalkylene glycol (meth) acrylate is preferable. Among the alkoxypolyalkylene glycol (meth) acrylate, one or more of alkoxypolyethylene glycol (meth) acrylate are preferable. More specifically, one or more of (2- (2-ethoxy) ethoxy) ethyl (meth) acrylate, methoxypolyethylene glycol (meth) acrylate (poly: n = 23) are preferable. The second monomer is more preferably one or more of (2- (2-ethoxy) ethoxy) ethyl (meth) acrylate, and most preferably (2- (2-ethoxy) ethoxy) ethyl (meth) acrylate. Therefore, the second monomer unit has a structure derived from these.

1-7. Content

By containing both the first monomer unit and the second monomer unit, when a slurry is prepared using the composition for the positive electrode according to the present invention, the change in viscosity of the slurry is small and the stability of the slurry is excellent. Further, it is more preferable when the following requirements are satisfied for the content of each component.

The composition contains a polyvinyl alcohol structure. When the content of the polyvinyl alcohol structure in the composition is $C_{PVA}$% by mass and the total content of the first monomer unit and the second monomer unit in the composition is $C_M$% by mass, the ratio of the content of the polyvinyl alcohol structure to the total content of the first monomer unit and the second monomer unit ($C_{PVA}/(C_M+C_{PVA})$) is preferably 0.05 to 0.7, and more preferably 0.10 to 0.55. When the ratio ($C_{PVA}/(C_M+C_{PVA})$) is in the above range, the slurry having low viscosity can be obtained. The ratio ($C_{PVA}/(C_M+C_{PVA})$) is specifically, for example, 0.05, 0.10, 0.15, 0.20, 0.25, 0.30, 0.35, 0.40, 0.45, 0.50, 0.55, 0.60, 0.65, 0.70 and may be within the range between the numerical values exemplified herein.

That is, the composition preferably contains 5 to 70% by mass of the polyvinyl alcohol structure. The composition preferably contains 95 to 30% by mass of the first monomer unit and the second monomer unit.

When the content of the first monomer unit is $PM_1$ mol%, and the content of the second monomer unit is $PM_2$ mol%, the ratio of the first monomer unit and the second monomer unit contained in the composition ($PM_1/(PM_2+PM_1)$) is preferably 0.1 to 0.9, more preferably 0.2 to 0.9. When the ratio of the first monomer unit and the second monomer unit is in the above range, the stability of the slurry is particularly high. The ratio is specifically, for example, 0.1, 0.2, 0.3, 0.4, 0.5, 0.6, 0.7, 0.8, 0.9, and may be within the range between the numerical values exemplified herein.

The composition preferably comprises a polyalkylene oxide structure (-AO-). Among the polyalkylene oxide structure, one or more of a polyethylene oxide structure and a polypropylene oxide structure are preferable, and a polyethylene oxide structure is most preferable. The composition containing a polyethylene oxide structure contains a polyethylene oxide structure ($-CH_2CH_2O-$). When the content of the polyethylene oxide structure (hereinafter, also referred to as a monomer having a PEO structure) in the composition is $C_{PEO}$% by mass, and a total content of the first monomer unit and the second monomer unit in the composition is $C_M$% by mass, the ratio of the content of the polyethylene oxide structure to the total content of the first monomer unit and the second monomer unit ($C_{PEO}/(C_M+C_{PEO})$) is 0.05 to 0.4, more preferably 0.10 to 0.35. When the ratio ($C_{PEO}/(C_M+C_{PEO})$) is in above range, high-rate discharge capacity retention ratio is excellent. Specifically, the ratio ($C_{PEO}/(C_M + C_{PEO})$) is, for example, 0.20, 0.25, 0.30, 0.35, 0.40, and may be within the range between the numerical values exemplified herein.

That is, the ether structure preferably has a polyethylene oxide structure, and the composition preferably contains 20 to 40% by mass of the polyethylene oxide structure.

The composition containing a polyethylene oxide structure may be paraphrased as a composition containing a polyalkylene oxide structure. In other words, the content of the polyalkylene oxide structure in the composition may be referred to as $C_{PEO}$.

1-8. Various measurement/calculation method

(Total content of first monomer unit and second monomer unit)

The composition comprises the PVA component and the first monomer component, and the second monomer component and the composition ratio ($PVA/PM_1/PM_2$) in the composition is determined by the charged amount (g) in the polymerization and the polymerization rate of the first and the second monomer. The polymerization rate (%) can be determined by NMR.

The total content (% by mass) of the first monomer unit and the second monomer unit in the composition is calculated by the following formula (2). The amount of PVA charged is calculated based on "the total content of the first monomer unit and the second monomer unit", and this amount of PVA charged can be regarded as "the content of the polyvinyl alcohol structure".

$$[(A\times B/100+C\times D/100)/(A\times B/100+C\times D/100+E)]\times 100(\%) \quad ---(2)$$

A: Mass of the first monomer used for copolymerization (charged amount)
B: Polymerization rate (%) of the first monomer after the reaction
C: Mass of the second monomer used for copolymerization (charged amount)
D: Polymerization rate (%) of the second monomer after the reaction
E: Mass of PVA used for polymerization (charged amount)

The total content of the first monomer unit and the second monomer unit can also be calculated from the integration ratio by NMR. When the integral value per proton of polyvinyl alcohol is $S_{PVA}$ and each of the integral values per proton of the first monomer and the second monomer is $S_1$ and $S_2$, the total content of the first monomer unit and the second monomer unit can be calculated by the following formula (2-2).

$$(S_1+S_2)\times 100/(S_{PVA}+S_1+S_2) \quad ---(2\text{-}2)$$

(Ratio of the first monomer and the second monomer unit)

The content ratio (% by mass) of the first monomer unit to the total amount of the first monomer unit and the second monomer unit in the composition can be obtained from the following formula (3).

$$[(A\times B/100)/(A\times B/100+C\times D/100)]\times 100(\%) \quad ---(3)$$

The content ratio (% by mass) of the first monomer unit to the total amount of the first monomer unit and the second monomer unit in the composition can also be determined from the following formula (3-2).

$$S_1\times 100/(S_1+S_2) \quad ---(3\text{-}2)$$

(Graft rate)

When a graft copolymer is produced (during graft copolymerization), a homopolymer of the first monomer and a homopolymer of the second monomer may be produced. Therefore, the calculation of the graft ratio requires a step of separating the homopolymers from the graft copolymer.
The homopolymers dissolve in dimethylformamide (hereinafter, it may be abbreviated as DMF), but PVA and the graft copolymer are not dissolved in DMF. Using the difference in solubility, the homopolymers can be separated by an operation such as centrifugation.
The graft ratio is calculated by the following formula (4).

$$[(G-F)/(G\times(100-H)/100)]\times 100 \quad ---(4)$$

F: Mass (g) of the component dissolved in DMF
G: Mass (g) of the composition used in the test
H: Total content (% by mass) of the first monomer unit and the second monomer unit in the composition

1-9. Method for producing graft copolymer

The method for producing the graft copolymer according to one embodiment of the present invention is not particularly limited. The method of polymerizing to obtain polyvinyl acetate, then saponifying the polyvinyl acetate to obtain polyvinyl alcohol, and graft-copolymerizing the first monomer, the second monomer, and other monomers to

polyvinyl alcohol is preferable.

As a method for polymerizing to obtain polyvinyl acetate, any known method such as bulk polymerization or solution polymerization can be used.

Examples of an initiator used for the polymerization of polyvinyl acetate include azo initiators such as azobisisobutyronitrile and organic peroxides such as benzoyl peroxide and bis (4-t-butylcyclohexyl) peroxydicarbonate.

The saponification reaction of polyvinyl acetate can be performed, for example, by a method of saponifying in an organic solvent in the presence of a saponification catalyst.

Examples of the organic solvent include methanol, ethanol, propanol, ethylene glycol, methyl acetate, ethyl acetate, acetone, methyl ethyl ketone, benzene, toluene, and the like. One or more of these may be used alone or in combination. Among these, methanol is preferred.

Examples of the saponification catalyst include basic catalysts such as sodium hydroxide, potassium hydroxide, and sodium alkoxide, and acidic catalysts such as sulfuric acid and hydrochloric acid. Among these, sodium hydroxide is preferable from the viewpoint of the saponification rate.

Examples of a method for graft-copolymerizing a monomer with polyvinyl alcohol include a solution polymerization method. Examples of the solvent used for the method include dimethyl sulfoxide, N-methylpyrrolidone, and the like.

Examples of an initiator used for graft copolymerization include organic peroxides such as benzoyl peroxide, azo compounds such as azobisisobutyronitrile, potassium peroxodisulfate, ammonium peroxodisulfate, and the like.

The graft copolymer of one embodiment of the present invention can be used by dissolving in a solvent. Examples of the solvent include dimethyl sulfoxide, N-methylpyrrolidone, and the like. The composition for the positive electrode and the slurry for the positive electrode described later may contain the solvent.

1-10. Other components

The composition for the positive electrode according to one embodiment of the present invention may contain other components such as a resin or the like as long as the effects of the present invention are not impaired. Examples of the resin include a fluorine-based resin such as polyvinylidene fluoride (PVDF) and polytetrafluoroethylene, a styrene-butadiene copolymer (styrene butadiene rubber and the like), and an acrylic copolymer. Among these, a fluorine-based resin, particularly polyvinylidene fluoride, is preferable from the viewpoint of stability.

2. Slurry for positive electrode

A slurry for a positive electrode according to one embodiment of the present invention comprises the above composition for the positive electrode and is excellent in stability. In addition, the slurry for the positive electrode according to one embodiment of the present invention contains the above-mentioned composition for the positive electrode and is low viscosity. In addition, the slurry for the positive electrode according to one embodiment of the present invention includes the above-mentioned composition for the positive electrode, and a positive electrode having excellent rate characteristics can be produced by the slurry. The slurry for the positive electrode may contain a composition for a positive electrode and a conductive auxiliary agent or may contain a composition for a positive electrode, positive electrode active materials, and a conductive auxiliary agent.

2-1. Slurry viscosity

The viscosity of the slurry for the positive electrode according to one embodiment of the present invention is preferably 350 mPa S or less, and more preferably 300 mPa S or less. The viscosity of the slurry is measured by a method according to JIS Z 8803: 2011 by a cone-and-plate rotary viscometer (Measuring instrument: MCR302 manufactured by Kitahama Seisakujo Corporation, measurement temperature: 25°C, rotational speed: $1s^{-1}$).

2-2. Slurry viscosity change

The amount of change in viscosity (viscosity change amount) of the slurry for the positive electrode according to one embodiment of the present invention is preferably -20% to 10%, more preferably -15% to 5%, wherein the amount of change in viscosity means the amount of change in viscosity before and after allowing the slurry to stand for 5 hours. It can be said that the slurry is stable when the amount of change in viscosity is small. The viscosity change amount $\Delta V$ is represented by the following formula.

$$\Delta V\ (\%) = [(V_1 - V_0)/V_0] \times 100$$

$V_0$: The viscosity of the slurry before being allowed to stand for 5 hours
$V_1$: The viscosity of the slurry after being allowed to stand for 5 hours

The slurry for the positive electrode according to one embodiment of the present invention preferably has the solid content of the composition for the positive electrode (binder) of 0.1 to 20% by mass with respect to the total solid content in the slurry for the positive electrode, and it is more preferably 1 to 10% by mass.

3. Lithium ion secondary battery

The battery comprising the positive electrode according to one embodiment of the present invention is preferably a secondary battery. The secondary battery is preferably one or more selected from a lithium ion secondary battery, a sodium ion secondary battery, a magnesium ion secondary battery, and a potassium ion secondary battery. It is more preferably a lithium ion secondary battery.

The positive electrode and the lithium ion secondary battery comprising the positive electrode according to one embodiment of the present invention can be produced using the slurry for the positive electrode including the above-mentioned composition for the positive electrode. Preferably, the lithium ion secondary battery comprises the above-mentioned positive electrode, negative electrode, separator, and electrolyte solution (hereinafter it may be referred to as electrolytes and electrolyte solution).

[Positive electrode]

The positive electrode according to one embodiment of the present invention is produced by applying the slurry for the positive electrode containing the composition for the positive electrode, the conductive auxiliary agent, and the positive electrode active material, which is used as needed, onto a current collector such as an aluminum foil, then heating to remove the solvent contained in the slurry, and further pressurizing the current collector and the electrode mixture layer with a roll press or the like to bring them into close contact with each other. That is, a positive electrode having a metal foil and a coating film of a slurry for a positive electrode formed on the metal foil can be obtained.

[Conductive auxiliary agent]

The conductive auxiliary agent is preferably at least one selected from the group consisting of (i) fibrous carbon, (ii) carbon black, and (iii) a carbon composite in which fibrous carbon and carbon black are interconnected.

Examples of the fibrous carbon include vapor growth carbon fibers, carbon nanotubes, carbon nanofibers, and the like. Examples of the carbon black include acetylene black, furnace black, Ketjenblack (registered trademark), and the like. These conductive auxiliary agents may be used alone or in combination of two or more. Among these, at least one selected from acetylene black, carbon nanotube, and carbon nanofiber is preferable from the viewpoint of high effect of improving the dispersibility of the conductive auxiliary agent.

The slurry for the positive electrode according to one embodiment of the present invention preferably has a solid content of the conductive auxiliary agent of 0.01 to 20% by mass with respect to the total solid content in the slurry for the positive electrode, and it is more preferably 0.1 to 10% by mass.

The battery including the positive electrode according to one embodiment of the present invention is preferably a secondary battery. As the secondary battery, one or more selected from a lithium ion secondary battery, a sodium ion secondary battery, a magnesium ion secondary battery, and a potassium ion secondary battery are preferable, and a lithium ion secondary battery is more preferable.

[Positive electrode active material]

A positive electrode active material may be used as needed. The positive electrode active material is preferably a positive electrode active material capable of reversibly absorbing and releasing cations. The positive electrode active material is preferably a lithium-containing composite oxide containing Mn or lithium-containing polyanionic compound having a volume resistivity of $1 \times 10^4$ Ω·cm or more. Examples include $LiCoO_2$, $LiMn_2O_4$, $LiNiO_2$, $LiMPO_4$, $Li_2MSiO_4$, $LiNi_xMn_{(2-X)}O_4$, $Li(Co_XNi_YMn_Z)O_2$, $Li(Ni_XCo_YAl_Z)O_2$, $XLi_2MnO_3$-(1-X)$LiMO_2$, and the like. Preferably, X in LiNiXMn (2-X) $O_4$ satisfies 0<X<2. Preferably, X, Y, and Z in $Li(Co_XNi_yMn_z)O_2$ and Li $(Ni_XCo_yAl_z)O_2$ satisfy X+Y+Z=1 and 0<X<1, 0<y<1, 0<z<1. Preferably, X in $XLi_2MnO_3$-(1-X)$LiMO_2$ satisfies 0<X<1. Preferably, M in $LiMPO_4$, $Li_2MSiO_4$, and $XLi_2MnO_3$-(1-X)$LiMO_2$ are preferably one or more of the elements selected from Fe, Co, Ni, and Mn.

The positive electrode active material is preferably at least one selected from the group consisting of: $LiNi_xMn_{(2-X)}O_4$ (0<X<2); $Li(Co_XNi_YMn_Z)O_2$ (0<X<1, 0<Y<1, 0<Z<1, and X+Y+Z=1); and $Li(Ni_XCo_YAl_Z)O_2$ (0<X<1, 0<Y<1, 0<Z<1, and X+Y+Z=1), and more preferably one selected from the group consisting of: $LiNi_XMn_{(2-X)}O_4$ (0<X<2);

$Li(Co_XNi_YMn_Z)O_2$ (0<X<1, 0<Y<1, 0<Z<1, and X+Y+Z=1).

Preferably, the slurry for the positive electrode according to one embodiment of the present invention preferably has the solid content of the positive electrode active material of 50 to 99.8% by mass with respect to the total solid content of in the slurry for the positive electrode, more preferably 80 to 99.5% by mass, and most preferably 95 to 99.0% by mass.

[Negative pole]

The negative electrode used in the lithium ion secondary battery according to one embodiment of the present invention is not particularly limited, and it can be manufactured using a slurry for a negative electrode containing a negative electrode active material. This negative electrode can be manufactured using, for example, a negative electrode metal foil and the slurry for a negative electrode provided on the metal foil. The slurry for a negative electrode preferably includes a negative electrode binder (a composition for a negative electrode), a negative electrode active material, and the above-described conductive auxiliary agent. The negative electrode binder is not particularly limited. Examples of the negative electrode binder include polyvinylidene fluoride, polytetrafluoroethylene, a styrene-butadiene copolymer (a styrene-butadiene rubber and the like), an acrylic copolymer, and the like may be used. The negative electrode binder is preferably a fluorine-based resin. As the fluorine-based resin, one or more of the group consisting of polyvinylidene fluoride and polytetrafluoroethylene is more preferable, and polyvinylidene fluoride is most preferable.

Examples of the negative electrode active material used for the negative electrode include carbon materials such as graphite, polyacene, carbon nanotubes, and carbon nanofibers, alloy materials such as tin and silicon, and oxidation such as tin oxide, silicon oxide, lithium titanate, and the like. These can be used alone, or two or more of these can be used in combination.

The metal foil for the negative electrode is preferably foil-like copper, and the thickness of the foil is preferably 5 to 30 $\mu$m from the viewpoint of workability. The negative electrode can be manufactured using the slurry for the negative electrode and the metal foil for the negative electrode by the method according to the above-mentioned manufacturing method for the positive electrode.

[Separator]

The separator is not particularly limited as long as it has sufficient strength. The examples of the separator include an electrical insulating porous membrane, a mesh, a nonwoven fabric, and the like. In particular, it is preferable to use a material that has low resistance to ion migration of the electrolytic solution and excellent in solution holding. The material is not particularly limited, and examples thereof include inorganic fibers such as glass fibers or organic fibers, a synthetic resin such as polyethylene, polypropylene, polyester, polytetrafluoroethylene, and polyflon and layered composites thereof. From the viewpoints of binding properties and stability, polyethylene, polypropylene, or layered composites thereof is preferable.

[Electrolyte]

As the electrolyte, any known lithium salt can be used. Examples of the electrolyte include $LiClO_4$, $LiBF_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, LiI, $LiB(C_2H_5)_4$, $LiCF_3SO_3$, $LiCH_3SO_3$, $LiCF_3SO_3$, $LiC_4F_9SO_3$, $LiN(CF_3SO_2)_2$, $LiN(C_2F_5SO_2)_2$, $LiC(CF_3SO_2)_3$, lithium fatty acid carboxylate, and the like.

[Electrolyte Solution]

The electrolyte solution dissolving the electrolyte is not particularly limited. Examples of the electrolyte solution include: carbonates such as propylene carbonate, ethylene carbonate, dimethyl carbonate, diethyl carbonate and methyl ethyl carbonate; lactones such as $\gamma$-butyrolactone; ethers such as trimethoxymethane, 1,2-dimethoxyethane, diethyl ether, 2-ethoxyethane, tetrahydrofuran and 2-methyltetrahydrofuran; sulfoxides such as dimethyl sulfoxide; oxolanes such as 1,3-dioxolane and 4-methyl-1,3-dioxolane; nitrogen-containing compounds such as acetonitrile, nitromethane and N-methyl-2-pyrrolidone; esters such as methyl formate, methyl acetate, ethyl acetate, butyl acetate, methyl propionate, ethyl propionate and phosphoric acid triester; inorganic acid esters such as sulfuric acid ester, nitric acid ester and hydrochloric acid ester; amides such as dimethylformamide and dimethylacetamide; glymes such as diglyme, triglyme and tetraglyme; ketones such as acetone, diethyl ketone, methyl ethyl ketone and methyl isobutyl ketone; sulfolanes such as sulfolane; oxazolidinones such as 3-methyl-2-oxazolidinone; sultone such as 1,3-propane sultone, 4-butane sultone and naphtha sultone; and the like. One or more selected from these electrolytic solutions can be used alone or in combination.

Among the above electrolytes and electrolyte solutions, a solution in which $LiPF_6$ is dissolved in carbonates is

preferable. The concentration of the electrolyte in the solution varies depending on the electrode and electrolyte used and is preferably 0.5 to 3 mol/L.

The application of the lithium ion secondary battery according to one embodiment of the present invention is not particularly limited. It may be used in a wide range of fields and examples of the application include a digital camera, a video camera, a portable audio player, a portable AV device such as a portable LCD TV, a mobile information terminal such as a notebook computer, a smartphone, or a mobile PC, a portable game device, an electric tool, an electric bicycle, a hybrid vehicle, an electric vehicle, and a power storage system.

## EXAMPLES

The present invention will be described in more detail with reference to examples below. These are exemplary and do not limit the present invention. Data are shown in Tables 1 to 3.

[Example 1]

<Preparation of polyvinyl alcohol (PVA)>

600 parts by mass of vinyl acetate and 400 parts by mass of methanol are prepared and degassed by bubbling nitrogen gas. Then, 0.3 parts by mass of bis (4-tert-butylcyclohexyl) peroxydicarbonate were added thereto as a polymerization initiator, and polymerization was carried out at 60 °C for 4 hours. When the polymerization was stopped, the solid content concentration of the polymerization solution was 48% by mass, and the polymerization rate of vinyl acetate determined on the basis of the solid content was 80%. Methanol vapor was blown into the obtained polymerization solution to remove unreacted vinyl acetate, and then the polymerization solution was diluted with methanol so that the concentration of polyvinyl acetate was 40% by mass.

20 parts by mass of a methanol solution of sodium hydroxide of 10% by mass of sodium hydroxide were added to 1,200 parts by mass of the diluted polyvinyl acetate solution, and a saponification reaction was performed at 30°C for 2 hours.

The saponified solution was neutralized with acetic acid, filtered and dried at 100°C for 2 hours to obtain PVA. The average degree of polymerization and saponification of the obtained PVA are shown in Table 1. The average degree of polymerization and saponification of PVA were measured by a method according to JIS K 6726.

<Preparation of composition>

1.65 parts by mass of the obtained PVA was added to 78.63 parts by mass of dimethyl sulfoxide and dissolved by stirring at 60°C for 2 hours. In addition, 3.56 parts by mass of acrylonitrile, 3.39 parts by mass of (2- (2-ethoxy)ethoxy) ethyl acrylate, and 0.45 parts by mass of ammonium peroxodisulfate dissolved in 1.43 parts by mass of dimethyl sulfoxide were added at 60°C, and graft-copolymerization was carried out with stirring at 60°C. After 4 hours from the start of the polymerization, the mixture was cooled to room temperature to stop the polymerization.

100 parts by mass of the obtained reaction solution were dropped to 300 parts by mass of methanol to precipitate the composition. The polymer was separated by filtration and vacuum-dried at room temperature for 2 hours, and further vacuum-dried at 80°C for 2 hours. The solid content was 9.76% by mass. The polymerization rate of acrylonitrile (the first monomer) and (2- (2-ethoxy) ethoxy) ethyl acrylate (the second monomer) was calculated to be 95% based on $^1$H-NMR.

In the obtained composition, the content ratio by mass of the polyvinyl alcohol structure is 20% by mass, the total content by mass of the first monomer unit and the second monomer unit is 80% by mass, and the graft ratio is 382%. The weight average molecular weight of the free polymer other than the stem polymer among the free polymer was 76200. These measuring methods will be described later in (Total content of first monomer unit and second monomer unit), (Graft ratio) and (Weight average molecular weight).

Table 1 shows the component and the like of the composition containing the obtained graft copolymer.

(Total content of first monomer unit and second monomer unit)

The total content by mass of the first monomer unit and the second monomer unit in the composition was calculated by the following formula (2).

$$[(A\times B/100+C\times D/100)/(A\times B/100+C\times D/100+E)]\times 100(\%) \qquad ---(2)$$

A: Mass of the first monomer used for copolymerization (charged amount)
B: Polymerization rate (%) of the first monomer after the reaction
C: Mass of the second monomer used for copolymerization (charged amount)
D: Polymerization rate (%) of the second monomer after the reaction
E: Mass of PVA used for polymerization (charged amount)

The total content of the first monomer unit and the second monomer unit can also be calculated from the integration ratio by NMR. When the integral value per proton of polyvinyl alcohol is $S_{PVA}$ and each of the integral values per proton of the first monomer and the second monomer is $S_1$ and $S_2$, the total content of the first monomer unit and the second monomer unit can be calculated by the following formula (2-2).

$$(S_1+S_2)\times100/(S_{PVA}+S_1+S_2) \quad \text{---(2-2)}$$

(Ratio of first monomer unit and second monomer unit)

The content ratio (% by mass) of the first monomer unit to the total amount of the first monomer unit and the second monomer unit in the composition was obtained from the following formula (3).

$$[(A\times B/100)/(A\times B/100+C\times D/100)]\times100(\%) \quad \text{---(3)}$$

The content ratio (% by mass) of the first monomer unit to the total amount of the first monomer unit and the second monomer in the composition can also be determined from the following equation ---(3-2).

$$S_1\times100/(S_1+S_2) \quad \text{---(3-2)}$$

(Graft Ratio)

1.00 g of the binder was weighed and added to 50 cc of special grade DMF (manufactured by Kokusan Chemical Co., Ltd.) and stirred at 80 °C for 24 hours at 1000 rpm. Next, the mixture was centrifuged for 30 minutes at a rotational speed of 10,000 rpm with a centrifuge (model: H2000B, rotor: H) manufactured by Kokusan Co., Ltd. After carefully separating the filtrate (DMF soluble component), the DMF insoluble component was vacuum-dried at 100 °C for 24 hours, and the graft ratio was calculated according to the above formula (4).

(Weight Average Molecular Weight)

The obtained filtrate at the time of centrifugation (DMF soluble component) was put into 1000 ml of methanol to obtain a precipitate. The precipitate was vacuum-dried at 80 °C for 24 hours, and the weight average molecular weight in terms of standard polystyrene was measured by GPC. GPC was measured under the following conditions.

Column: two of GPC LF-804, φ8.0 × 300 mm (manufactured by Showa Denko KK) were connected in series
Column Temperature: 40 °C
Solvent: 20 mM LiBr/DMF

<Preparation of slurry>

5 parts by mass of the obtained binder were dissolved in 95 parts by mass of N-methyl-2-pyrrolidone (hereinafter, abbreviated as NMP) to obtain a binder solution. Further, 1 part by mass of acetylene black (Denka Black (registered trademark) "HS-100" manufactured by Denka Company Limited) and 1 part by mass of the binder solution in solid content were added and the mixture was stirred. After mixing, 98 parts by mass of $LiNi_{0.5}Mn_{1.5}O_4$ were added and the mixture was stirred to obtain a slurry for a positive electrode.

(Viscosity of slurry)

The viscosity of the slurry was measured by a cone-and-plate rotary viscometer. The viscosity referred to here is a value measured by a method according to JIS Z 8803: 2011. The viscosity measurement was performed under the

following conditions.

Measuring equipment: MCR302 manufactured by Kitahama Seisakujo Corporation
Measurement temperature: 25°C
Rotational speed: $1s^{-1}$

<Preparation of Positive Electrode>

The prepared slurry for positive electrode was applied to an aluminum foil having a thickness of 20 μm by an automatic coating machine so that the coating film has 140 mg/cm$^2$ and was preliminarily dried at 105°C for 30 minutes. Next, it was pressed with a roll press machine at a linear pressure of 0.1 to 3.0 ton/cm so that the positive electrode plate has an average thickness of 75 μm. Furthermore, the positive electrode plate was cut into a width of 54 mm to produce a strip-shaped positive electrode plate. After ultrasonically welding a current collecting tab made of aluminum to the end of the positive electrode plate, in order to completely remove volatile components such as residual solvent and adsorbed moisture, it was dried at 105 °C for 1 hour to obtain a positive electrode.

<Preparation of Negative Electrode>

96.6 parts by mass of graphite ("Carbotron (registered trademark) P" manufactured by Kureha Corporation) as a negative electrode active material, 3.4 parts by mass in the solid content of polyvinylidene fluoride ("KF polymer (registered trademark) # 1120" manufactured by Kureha Corporation) as a binder, and an appropriate amount of NMP was added and mixed with stirring so that the total solid content is 50% by mass, to obtain a slurry of the negative electrode.

The prepared slurry for negative electrode was applied to both sides of a cupper foil having a thickness of 10 μm by an automatic coating machine so that each coating film has 70 mg/cm$^2$ and was preliminarily dried at 105 °C for 30 minutes. Next, it was pressed with a roll press machine at a linear pressure of 0.1 to 3.0 ton/cm so that the negative electrode plate has an average thickness of 90 μm as the total thickness including the coating films of both sides. Furthermore, the negative electrode plate was cut into a width of 54 mm to produce a strip-shaped positive electrode plate. After ultrasonically welding a current collecting tab made of nickel to the end of the negative electrode plate, in order to completely remove volatile components such as residual solvent and adsorbed moisture, it was dried at 105 °C for 1 hour to obtain a negative electrode.

<Preparation of lithium ion secondary battery>

The obtained positive electrode and negative electrode were combined and wound with a polyethylene microporous membrane separator having a thickness of 25 μm and a width of 60 mm to produce a spiral wound group, which was then inserted into a battery can. Next, 5 ml of a non-aqueous electrolyte solution (ethylene carbonate/methylethyl carbonate = 30/70 (mass ratio) mixed solution) in which $LiPF_6$ was dissolved at a concentration of 1 mol/L as an electrolyte was injected into the battery container. Thereafter, the inlet was caulked and sealed to produce a cylindrical lithium secondary battery having a diameter of 18 mm and a height of 65 mm. The battery performance of the prepared lithium ion secondary battery was evaluated with the following method.

(High-rate discharge capacity retention ratio)

The manufactured lithium ion battery was charged at a constant current and a constant voltage limitation of 5.00 ± 0.02 V and 0.2 ItA at 25 °C, and then discharged to 3.00 ± 0.02 V at a constant current of 0.2 ItA. Next, the discharge current was changed to 0.2 ItA, 1 ItA, and the discharge capacity for each discharge current was measured. In the recovery charge in each measurement, constant current and constant voltage charge of limitation of 5.00 ± 0.02V (1 ItA cut) were performed. Then, the high-rate discharge capacity retention ratio at 1 ItA discharge with respect to the second time of 0.2 ItA discharge was calculated.

(Cycle capacity retention rate)

At an environmental temperature of 25°C, a constant current and constant voltage charge of 5.00 ± 0.02 V of a charging voltage and 1 ItA was performed and a constant current discharge of 3.00 ± 0.02 V of a discharge end voltage and 1 ItA was performed. The charge and discharge cycles were repeated, and the ratio of the discharge capacity at the 500th cycle to the discharge capacity at the first cycle was obtained and used as the cycle capacity retention rate.

[Examples 2 to 20]

The compositions having the composition and physical properties shown in Tables 1 and 2 were obtained in the same manner as in Example 1 except that PVA having an average degree of polymerization and saponification as shown in Tables 1 and 2 is used, and the first monomer unit and the second monomer unit of the types as shown in Tables 1 and 2 were used at the contents shown in Tables 1 and 2. The results are shown in Tables 1 and 2. In Tables 1 and 2, the content of the polyalkylene oxide structure in the composition is represented as $C_{PEO}$. Examples 1 to 4 and 6 to 10 of Table 1 and Examples 12, 14, 15, 17 and 18 of Table 2 are Comparative Examples.

[Comparative Example 1]

Polyvinylidene fluoride resin (HSV900: manufactured by Arkema Co., Ltd.) was used as the composition. The results are shown in Table 3.

[Comparative Examples 2 to 3]

The compositions having the composition and physical properties shown in Table 3 were obtained in the same manner as in Example 2 except that the contents of PVA, the first monomer unit, and the second monomer unit are set as shown in Table 3. The results are shown in Table 3.

The abbreviations used in the following tables and the like represent the following compounds. The monomer unit represents a monomer from which the monomer unit is derived.

AN: acrylonitrile
AA: acrylic acid
EEA: 2- (2-ethoxyethoxy) ethyl acrylate
MDA: methoxydipropylene glycol acrylate
MPM: methoxypolyethylene glycol methacrylate (poly: n = 23)
PHD: 3,6,9,12,15-pentaoxa-1 -heptadecene
PVDF: polyvinylidene fluoride

[Table 1]

| Table 1 | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| polymerization degree of PVA | | | 320 | 1640 | 3610 | 1710 | 1640 | 1640 | 1640 | 1640 | 1640 | 1640 |
| saponification degree of PVA | | | 96.5 | 97.5 | 95.1 | 63 | 97.5 | 97.5 | 97.5 | 97.5 | 97.5 | 97.5 |
| content (% by mass) | PVA | | 20 | 20 | 20 | 20 | 5 | 38 | 50 | 20 | 20 | 20 |
| | first monomer unit | AN | 41 | 42 | 39 | 42 | 47.5 | 47.5 | 26 | | | 63 |
| | | AA | | | | | | | | 41 | 42 | |
| | second monomer unit | EEA | 39 | 38 | 41 | 38 | 47.5 | 14.5 | 24 | 39 | 38 | 17 |
| | | MDA | | | | | | | | | | |
| | | MPM | | | | | | | | | | |
| | | PHD | | | | | | | | | | |
| | PVDF | | | | | | | | | | | |
| graft rate (%) | | | 382 | 382 | 382 | 382 | 1817 | 156 | 96 | 382 | 382 | 382 |
| $C_{PVA}/(C_M+C_{PVA})$ | | | 0.20 | 0.20 | 0.20 | 0.20 | 0.05 | 0.38 | 0.50 | 0.20 | 0.20 | 0.20 |
| $PM_1/(PM_1+PM_2)$ | | | 0.51 | 0.53 | 0.49 | 0.53 | 0.50 | 0.77 | 0.52 | 0.51 | 0.53 | 0.79 |
| content of polyethylene oxide (% by mass) | | | 17.8 | 17.4 | 18.8 | 17.4 | 21.7 | 6.6 | 11.0 | 17.8 | 17.4 | 7.8 |
| $C_{PEO}/(C_M+C_{PEO})$ | | | 0.18 | 0.17 | 0.19 | 0.17 | 0.22 | 0.07 | 0.11 | 0.18 | 0.17 | 0.08 |
| weight average molecular weight of free polymer other than stem polymer | | | 76200 | 65200 | 55500 | 65200 | 240000 | 260000 | 40000 | 75000 | 79500 | 69800 |
| evaluation items | high-rate discharge capacity retention ratio (%) | | 93 | 94 | 93 | 95 | 96 | 80 | 90 | 93 | 92 | 85 |
| | cycle capacity retention rate (%) | | 83 | 83 | 82 | 83 | 85 | 83 | 85 | 84 | 85 | 85 |
| | viscosity of slurry with solid content concentration of 80% by mass (mPa·s) | | 252.5 | 252.5 | 250 | 262.5 | 299 | 245 | 262.5 | 272.5 | 260 | 252.5 |
| | viscosity of slurry after being allowed to stand for 5 hours (mPa·s) | | 232.5 | 250 | 230 | 242.5 | 285 | 236.5 | 247.5 | 267.5 | 237.5 | 240 |
| | viscosity change amount (%) | | -7.9 | -1.0 | -8.0 | -7.6 | -4.7 | -3.5 | -5.7 | -1.8 | -8.7 | -5.0 |

[Table 2]

| Table 2 | | | Examples | | | | | | | | |
|---|---|---|---|---|---|---|---|---|---|---|---|
| | | | 11 | 12 | 13 | 14 | 15 | 16 | 17 | 18 | 19 |
| polymerization degree of PVA | | | 1640 | 1640 | 1640 | 1640 | 1640 | 1640 | 1640 | 1640 | 1640 |
| saponification degree of PVA | | | 97.5 | 97.5 | 97.5 | 97.5 | 97.5 | 97.5 | 97.5 | 97.5 | 97.5 |
| content (% by mass) | PVA | | 20 | 20 | 20 | 20 | 15 | 15 | 60 | 75 | 20 |
| | first monomer unit | AN | 17 | 41 | 41 | 60 | 70 | 10 | 20 | 17 | 7 |
| | | AA | | | | | | | | | |
| | second monomer unit | EEA | 63 | | | | 15 | 75 | 20 | 8 | 73 |
| | | MDA | | 39 | | | | | | | |
| | | MPM | | | 39 | | | | | | |
| | | PHD | | | | 20 | | | | | |
| | PVDF | | | | | | | | | | |
| graft rate (%) | | | 382 | 382 | 382 | 382 | 542 | 542 | 64 | 32 | 382 |
| $C_{PVA}/ (C_M+C_{PVA})$ | | | 0.2 | 0.2 | 0.2 | 0.2 | 0.15 | 0.15 | 0.6 | 0.75 | 0.2 |
| $PM_1/ (PM_1+PM_2)$ | | | 0.21 | 0.51 | 0.51 | 0.75 | 0.82 | 0.12 | 0.50 | 0.68 | 0.09 |
| content of polyethylene oxide (% by mass) | | | 28.8 | 15.5 | 34.7 | 13.9 | 6.9 | 34.3 | 9.1 | 3.7 | 33.4 |
| $C_{PEO}/ (C_M+C_{PEO})$ | | | 0.29 | 0.16 | 0.35 | 0.14 | 0.07 | 0.34 | 0.09 | 0.04 | 0.33 |
| weight average molecular weight of free polymer other than stem polymer | | | 83900 | 99900 | 99900 | 85500 | 87000 | 84200 | 77500 | 77500 | 85700 |
| evaluation items | high-rate discharge capacity retention ratio (%) | | 92 | 92 | 88 | 91 | 81 | 89 | 85 | 68 | 80 |
| | cycle capacity retention rate (%) | | 85 | 83 | 83 | 82 | 82 | 82 | 52 | 52 | 57 |
| | viscosity of slurry with solid content concentration of 80% by mass (mPa·s) | | 260 | 250 | 260 | 245 | 257.5 | 289 | 362.5 | 422 | 301 |
| | viscosity of slurry after being allowed to stand for 5 hours (mPa·s) | | 232.5 | 235 | 225 | 242.5 | 246 | 235 | 320 | 401 | 221 |
| | viscosity change amount (%) | | -10.6 | -6.0 | -13.5 | -1.0 | -4.5 | -18.7 | -11.7 | -5.0 | -26.6 |

[Table 3]

<table>
<tr><td colspan="3" rowspan="2">Table 3</td><td colspan="3">Comparative example</td></tr>
<tr><td>1</td><td>2</td><td>3</td></tr>
<tr><td colspan="3">polymerization degree of PVA</td><td>-</td><td>1640</td><td>1640</td></tr>
<tr><td colspan="3">saponification degree of PVA</td><td>-</td><td>97.5</td><td>97.5</td></tr>
<tr><td rowspan="8">content (% by mass)</td><td colspan="2">P V A</td><td></td><td>20</td><td>20</td></tr>
<tr><td rowspan="2">first monomer unit</td><td>A N</td><td></td><td>80</td><td></td></tr>
<tr><td>A A</td><td></td><td></td><td></td></tr>
<tr><td rowspan="4">second monomer unit</td><td>E E A</td><td></td><td></td><td>80</td></tr>
<tr><td>M D A</td><td></td><td></td><td></td></tr>
<tr><td>M P M</td><td></td><td></td><td></td></tr>
<tr><td>P H D</td><td></td><td></td><td></td></tr>
<tr><td colspan="2">P V D F</td><td>100</td><td></td><td></td></tr>
<tr><td colspan="3">graft rate (%)</td><td>-</td><td>382</td><td>382</td></tr>
<tr><td colspan="3">$C_{PVA}/(C_M+C_{PVA})$</td><td>0</td><td>0.2</td><td>0.2</td></tr>
<tr><td colspan="3">$PM_1/(PM_1+PM_2)$</td><td>-</td><td>1.00</td><td>1.00</td></tr>
<tr><td colspan="3">content of polyethylene oxide (% by mass)</td><td>0</td><td>0</td><td>36.6</td></tr>
<tr><td colspan="3">$C_{PEO}/(C_M+C_{PEO})$</td><td>-</td><td>-</td><td>0.37</td></tr>
<tr><td colspan="3">weight average molecular weight of free polymer other than stem polymer</td><td>-</td><td>75600</td><td>65200</td></tr>
<tr><td rowspan="5">evaluation items</td><td colspan="2">high-rate discharge capacity retention ratio (%)</td><td>78</td><td>72</td><td>92</td></tr>
<tr><td colspan="2">cycle capacity retention rate (%)</td><td>60</td><td>59</td><td>55</td></tr>
<tr><td colspan="2">viscosity of slurry with solid content concentration of 80% by mass (mPa·s)</td><td>336</td><td>336</td><td>325</td></tr>
<tr><td colspan="2">viscosity of slurry after being allowed to stand for 5 hours (mPa·s)</td><td>221</td><td>212</td><td>221</td></tr>
<tr><td colspan="2">viscosity change amount (%)</td><td>-34.2</td><td>-36.9</td><td>-32.0</td></tr>
</table>

## Claims

**1.** A composition comprising a graft copolymer, wherein

the graft copolymer has a stem polymer and a plurality of branch polymers,
the stem polymer has a polyvinyl alcohol structure,
each of a first monomer unit and a second monomer unit is included in at least one of the plurality of branch polymers,
the first monomer unit is a (meth) acrylonitrile monomer unit and/or a (meth)acrylic acid monomer unit,
the second monomer unit has an ether structure, wherein the ether structure has a polyethylene oxide structure, and
when a content of the polyethylene oxide structure in the composition is $C_{PEO}$% by mass, and a total content of the first monomer unit and the second monomer unit in the composition is $C_M$% by mass, a ratio of the content of the polyethylene oxide structure to the total content of the first monomer unit and the second monomer unit ($C_{PEO}/(C_M+C_{PEO})$) is 0.20 to 0.40.

**2.** The composition of Claim 1, wherein

the composition further comprises a free polymer,

the free polymer does not have a covalent bond with the graft copolymer, and
the free polymer contains at least one of a polymer having the polyvinyl alcohol structure and a polymer having the first monomer unit and/or the second monomer unit.

3. The composition of Claim 1 or 2, wherein
when a content of the polyvinyl alcohol structure in the composition is $C_{PVA}$% by mass and a total content of the first monomer unit and the second monomer unit in the composition is $C_M$% by mass, a ratio of the content of the polyvinyl alcohol structure to the total content of the first monomer unit and the second monomer unit ($C_{PVA}/(C_M+C_{PVA})$) is 0.05 to 0.7.

4. The composition of any one of Claims 1 to 3, wherein
when a content of the first monomer unit is $PM_1$ mol%, and a content of the second monomer unit is $PM_2$ mol%, a ratio of the first monomer unit and the second monomer unit contained in the composition ($PM_1/(PM_2+PM_1)$) is 0.1 to 0.9.

5. The composition of any one of claims 1 to 4, wherein at least one of the plurality of branch polymers has a copolymerization structure of the first monomer unit and the second monomer unit.

6. The composition of any one of Claims 1 to 5, wherein the ether structure has at least one selected from the group consisting of a linear polyether structure, a branched polyether structure, and an annular ether structure.

7. The composition of any one of Claims 1 to 6, wherein an average polymerization degree of the polyvinyl alcohol structure in the composition is 300 to 4000.

8. The composition of any one of Claims 1 to 7, wherein a saponification degree of the polyvinyl alcohol structure in the composition is 60 to 100 mol%.

9. The composition of any one of Claims 1 to 8, wherein a graft ratio of the graft copolymer is 40 to 3000%.

10. A slurry for a positive electrode containing the composition of any one of Claims 1 to 9, a positive electrode active material, and a conductive auxiliary agent.

11. The slurry for the positive electrode of Claim 10, wherein a solid content of the composition is 0.1 to 20% by mass with respect to a total solid content in the slurry for the positive electrode.

12. The slurry for the positive electrode of Claim 10 or 11, wherein the cathode active material contains at least one selected from the group consisting of: $LiNi_xMn_{(2-X)}O_4$ ($0<X<2$); $Li(Co_XNi_YMn_Z)O_2$ ($0<X<1$, $0<Y<1$, $0<Z<1$, and $X+Y+Z=1$); and $Li(Ni_XCo_YAl_Z)O_2$ ($0<X<1$, $0<Y<1$, $0<Z<1$, and $X+Y+Z=1$).

13. The slurry for the positive electrode of any one of Claims 10 to 12, wherein the conductive auxiliary agent is at least one selected from the group consisting of (i) fibrous carbon, (ii) carbon black, and (iii) a carbon composite in which fibrous carbon and carbon black are interconnected.

## Patentansprüche

1. Zusammensetzung, umfassend ein Pfropfcopolymer, wobei

das Pfropfcopolymer ein Stammpolymer und eine Mehrzahl von Verzweigungspolymeren aufweist,
das Stammpolymer eine Polyvinylalkoholstruktur aufweist,
jede von einer ersten Monomereinheit und einer zweiten Monomereinheit in mindestens einem von der Mehrzahl von Verzweigungspolymeren enthalten ist,
die erste Monomereinheit eine (Meth)acrylnitrilmonomereinheit und/oder eine (Meth)acrylsäuremonomereinheit ist,
die zweite Monomereinheit eine Etherstruktur aufweist, wobei die Etherstruktur eine Polyethylenoxidstruktur aufweist, und
wenn ein Anteil der Polyethylenoxidstruktur in der Zusammensetzung $C_{PEO}$ in Masse-% ist, und ein Gesamtanteil der ersten Monomereinheit und der zweiten Monomereinheit in der Zusammensetzung $C_M$ in Masse-% ist, ein

Verhältnis des Anteils der Polyethylenoxidstruktur zu dem Gesamtanteil der ersten Monomereinheit und der zweiten Monomereinheit ($C_{PEO}/(C_M+C_{PEO})$) 0,20 bis 0,40 beträgt.

2. Zusammensetzung nach Anspruch 1, wobei

die Zusammensetzung weiterhin ein freies Polymer umfasst,
das freie Polymer keine kovalente Bindung mit dem Pfropfcopolymer aufweist, und
das freie Polymer mindestens eines von einem Polymer mit der Polyvinylalkoholstruktur und einem Polymer mit der ersten Monomereinheit und/oder der zweiten Monomereinheit enthält.

3. Zusammensetzung nach Anspruch 1 oder 2, wobei
wenn ein Anteil der Polyvinylalkoholstruktur in der Zusammensetzung $C_{PVA}$ in Masse-%, ist und ein Gesamtanteil der ersten Monomereinheit und der zweiten Monomereinheit in der Zusammensetzung $C_M$ in Masse-%, ist, ein Verhältnis des Anteils der Polyvinylalkoholstruktur zu dem Gesamtanteil der ersten Monomereinheit und der zweiten Monomereinheit ($C_{PVA}/(C_M+C_{PVA})$) 0,05 bis 0,7 beträgt.

4. Zusammensetzung nach einem der Ansprüche 1 bis 3, wobei
wenn ein Anteil der ersten Monomereinheit $PM_1$ in Mol-%, ist und ein Anteil der zweiten Monomereinheit $PM_2$ in Mol-%, ist, ein Verhältnis der in der Zusammensetzung enthaltenen ersten Monomereinheit und zweiten Monomereinheit ($PM_1/(PM_2+PM_1)$) 0,1 bis 0,9 beträgt.

5. Zusammensetzung nach einem der Ansprüche 1 bis 4, wobei mindestens eines von der Mehrzahl von Verzweigungspolymeren eine Copolymerisationsstruktur der ersten Monomereinheit und der zweiten Monomereinheit aufweist.

6. Zusammensetzung nach einem der Ansprüche 1 bis 5, wobei die Etherstruktur mindestens eine ausgewählt aus der Gruppe bestehend aus einer linearen Polyetherstruktur, einer verzweigten Polyetherstruktur und einer ringförmigen Etherstruktur aufweist.

7. Zusammensetzung nach einem der Ansprüche 1 bis 6, wobei ein mittlerer Polymerisationsgrad der Polyvinylalkoholstruktur in der Zusammensetzung 300 bis 4000 beträgt.

8. Zusammensetzung nach einem der Ansprüche 1 bis 7, wobei ein Verseifungsgrad der Polyvinylalkoholstruktur in der Zusammensetzung 60 bis 100 Mol-% beträgt.

9. Zusammensetzung nach einem der Ansprüche 1 bis 8, wobei ein Pfropfanteil des Pfropfcopolymers 40 bis 3000 % beträgt.

10. Aufschlämmung für eine positive Elektrode, die die Zusammensetzung nach einem der Ansprüche 1 bis 9, ein Positivelektroden-Aktivmaterial und ein leitfähiges Hilfsmittel enthält.

11. Aufschlämmung für die positive Elektrode nach Anspruch 10, wobei ein Feststoffanteil der Zusammensetzung 0,1 bis 20 Masse-% in Bezug auf einen Gesamtfeststoffanteil in der Aufschlämmung für die positive Elektrode beträgt.

12. Aufschlämmung für die positive Elektrode nach Anspruch 10 oder 11, wobei das Kathodenaktivmaterial mindestens eines ausgewählt aus der Gruppe bestehend aus $LiNi_XMn_{(2-X)}O_4$ ($0 < X < 2$); $Li(Co_XNi_YMn_Z)O_2$ ($0<X<1$, $0<Y<1$, $0<Z<1$ und $X+Y+Z=1$); und $Li(Ni_XCo_YAl_Z)O_2$ ($0<X<1$, $0<Y<1$, $0<Z<1$ und $X+Y+Z=1$), enthält.

13. Aufschlämmung für die positive Elektrode nach einem der Ansprüche 10 bis 12, wobei das leitfähige Hilfsmittel mindestens eines ausgewählt aus der Gruppe bestehend aus (i) faserförmigem Kohlenstoff, (ii) Ruß und (iii) einem Kohlenstoffverbundstoff, bei dem faserförmiger Kohlenstoff und Ruß miteinander verbunden sind, ist.

## Revendications

1. Composition, comprenant un copolymère greffé, où

le copolymère greffé présente un polymère à chaîne principale et une pluralité de polymères ramifiés,

le polymère à chaîne principale présente une structure d'alcool polyvinylique,
une première unité monomère et une deuxième unité monomère sont comprises chacune dans au moins un polymère de la pluralité de polymères ramifiés,
la première unité monomère est une unité monomère de (méth)acrylonitrile et/ou une unité monomère d'acide (méth)acrylique,
la deuxième unité monomère présente une structure d'éther, ladite structure d'éther présentant une structure d'oxyde polyéthylène, et,
si une teneur de la structure d'oxyde polyéthylène dans la composition est $C_{PEO}$ en pourcentage massique, et une teneur totale de la première unité monomère et de la deuxième unité monomère dans la composition est $C_M$ en pourcentage massique, un rapport entre la teneur de la structure d'oxyde polyéthylène et la teneur totale de la première unité monomère et de la deuxième unité monomère ($C_{PEO}/(C_M+C_{PEO})$) est compris entre 0,20 et 0,40.

**2.** Composition selon la revendication 1, où

la composition comprend en outre un polymère libre,
le polymère libre n'a pas de liaison covalente avec le copolymère greffé, et
le polymère libre contient au moins un élément parmi un polymère présentant la structure d'alcool polyvinylique et un polymère présentant la première unité monomère et/ou la deuxième unité monomère.

**3.** Composition selon la revendication 1 ou la revendication 2, où, si une teneur de la structure d'alcool polyvinylique dans la composition est $C_{PVA}$ en pourcentage massique et une teneur totale de la première unité monomère et de la deuxième unité monomère dans la composition est $C_M$ en pourcentage massique, un rapport entre la teneur de la structure d'alcool polyvinylique et la teneur totale de la première unité monomère et de la deuxième unité monomère ($C_{PVA}/(C_M+C_{PVA})$) est compris entre 0,05 et 0,7,

**4.** Composition selon l'une des revendications 1 à 3, où, si une teneur de la première unité monomère est $PM_1$ en pourcentage molaire et une teneur de la deuxième unité monomère est $PM_2$ en pourcentage molaire, un rapport entre la première unité monomère et la deuxième unité monomère contenues dans la composition ($PM_1/(PM_2+PM_1)$) est compris entre 0,1 et 0,9,

**5.** Composition selon l'une des revendications 1 à 4, où au moins un polymère de la pluralité de polymères ramifiés présente une structure de copolymérisation de la première unité monomère et de la deuxième unité monomère.

**6.** Composition selon l'une des revendications 1 à 5, où la structure d'éther présente au moins une structure sélectionnée dans le groupe consistant en une structure de polyéther linéaire, une structure de polyéther ramifié et une structure d'éther annulaire.

**7.** Composition selon l'une des revendications 1 à 6, où un degré de polymérisation moyen de la structure d'alcool polyvinylique dans la composition est compris entre 300 et 4000.

**8.** Composition selon l'une des revendications 1 à 7, où un degré de saponification de la structure d'alcool polyvinylique dans la composition est compris entre 60 et 100 en pourcentage molaire,

**9.** Composition selon l'une des revendications 1 à 8, où un taux de greffage du copolymère greffé est compris entre 40 et 3000 %.

**10.** Suspension épaisse pour électrode positive, contenant la composition selon l'une des revendications 1 à 9, un matériau actif d'électrode positive et un agent auxiliaire conducteur.

**11.** Suspension épaisse pour électrode positive selon la revendication 10, où une teneur en solides de la composition est comprise entre 0,1 et 20 en pourcentage massique par rapport à une teneur en solides totale de la suspension épaisse pour électrode positive,

**12.** Suspension épaisse pour électrode positive selon la revendication 10 ou la revendication 11, où le matériau actif de cathode contient au moins un élément sélectionné dans le groupe consistant en : $LiNi_XMn_{(2-X)}O_4$ ($0<X<2$); $Li(Co_XNi_YMn_Z)O_2$ ($0<X<1$, $0<Y<1$, $0<Z<1$, et $X+Y+Z=1$); et $Li(Ni_XCo_YAl_Z)O_2$ ($0<X<1$, $0<Y<1$, $0<Z<1$, et $X+Y+Z=1$).

**13.** Suspension épaisse pour électrode positive selon l'une des revendications 10 à 12, où l'agent auxiliaire conducteur est au moins un agent sélectionné dans le groupe consistant en (i) carbone fibreux, (ii) noir de carbone, et (iii) un composite de carbone où du carbone fibreux et du noir de carbone sont interconnectés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013098123 A
- JP 2013084351 A
- JP H6172452 B
- WO 2015053224 A
- US 2016380314 A1
- WO 2018230599 A1
- JP 2000095823 A
- JP 2010521798 A